# EUROPÄISCHE PATENTSCHRIFT

(11) **EP 1 707 850 B1**
(45) Veröffentlichungstag und Bekanntmachung des Hinweises auf die Patenterteilung: **26.12.2007**
(21) Anmeldenummer: 05007038.2
(22) Anmeldetag: 31.03.2005
(51) Int. Cl.: F16H 25/24, F16K 31/04

(54) **Getriebevorrichtung**
Transmission device
Dispositif de transmission

(43) Veröffentlichungstag der Anmeldung: 04.10.2006
(73) Patentinhaber: Siemens Schweiz AG, 8047 Zürich (CH)
(72) Erfinder: Bucher, Johannes, 8872 Weesen (CH)
(74) Vertreter: Berg, Peter

(56) Entgegenhaltungen:
- EP-A- 1 515 415
- DE-A1- 10 306 875
- DE-A1- 10 354 338
- DE-A1- 19 525 454
- US-A- 4 623 051

## Beschreibung

Die Erfindung bezieht sich auf eine Getriebevorrichtung für einen Bewegungswandler aufweisenden Antrieb.

Derartige Getriebevorrichtungen sind allgemein in Antrieben einsetzbar, in denen eine Rotationsbewegung reversibel in eine Längsbewegung umgewandelt wird.

Eine derartige Getriebevorrichtung ist beispielsweise in einem Stellantrieb, in welchen eine Rotationsbewegung reversibel in eine Längsbewegung umgewandelt wird, als Rücklaufbremse einsetzbar.

Solche Getriebevorrichtungen sind insbesondere auch in Ventil-, Schieber- oder Klappenantrieben einsetzbar, in denen ein Stellglied durch eine Längsbewegung zu betätigen ist und die Stellenergie beispielsweise von einem Elektromotor geliefert wird. Derartige Getriebevorrichtungen sind damit beispielhaft auch in regelbaren Antrieben für Stellglieder in der Heizungs-, Lüftungs-, Raumklima- und Kältetechnik einsetzbar.

Es ist bekannt, als Bewegungswandler zur Umwandlung einer Drehbewegung in eine Längsbewegung beispielsweise Bewegungsschrauben oder Gewindespindeln in Kombination mit einem Mutterelement einzusetzen, wobei entweder ein Gewindebolzen oder ein passendes Mutterelement die Drehbewegung ausführt.

Insbesondere, wenn ein Antrieb mittels Batterie elektrisch versorgt wird, ist grundsätzlich ein hoher Wirkungsgrad gefordert. So wird beispielsweise auch ein hoher Wirkungsgrad angestrebt, wenn ein Hub eines Ventils gegen die Ventilkraft zu verstellen ist. Hat nun aber eine Getriebevorrichtung einen hohen Wirkungsgrad, ergibt sich der Nachteil, dass die Grenze der Selbsthemmung unterschritten wird. In diesem Fall würde sich beispielsweise ein Ventilstellantrieb selbsttätig zurückstellen, wenn die Speisung eines Antriebsmotors unterbrochen würde. Abhilfe könnte beispielsweise die Verwendung eines selbsthemmenden Bewegungswandlers schaffen.

Es sind nun aber reversible Bewegungswandler bekannt, welche in beide Wirkrichtungen einen hohen Wirkungsgrad aufweisen, also nicht selbsthemmend sind, und die besonders für Batterie gespeiste Antriebsvorrichtungen des geringen Energieverlusts wegen vorteilhaft sind.

Aus DE 103 06 875 A ist ein reversibler Bewegungswandler mit einer Bremse und einem Freilauf bekannt, wobei der Freilauf mit der Bremse derart zusammenwirkt, dass die Bremse lediglich in einer Bewegungsrichtung wirksam wird.

Ferner wird in EP 1 515 415 A vorgeschlagen, einen einen reversiblen Bewegungswandler aufweisenden Antrieb ausgangsseitig über eine Kupplung trennbar auszugestalten.

Schliesslich ist aus US 4,623,051, die alle Merkmale des Oberbegriffs des Anspruchs 1 offenbart, ein reversibler Bewegungswandler bekannt, der ein Kugellager aufweist, welches in einer Drehrichtung durch eine Schlingfeder überbrückbar ist. Die Schlingfeder ist dabei über das Kugellager gewickelt, sodass das Lagerspiel von der Schlingfeder überdeckt wird.

Der Erfindung liegt die Aufgabe zu Grunde, eine Getriebevorrichtung für einen Antrieb mit selbsthemmungsfreiem Bewegungswandler so zu schaffen, dass der wenigstens in einer Antriebsrichtung einen hohen Wirkungsgrad aufweist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
Fig. 1 eine schematische Darstellung einer beispielhaften Stellvorrichtung mit einer erfindungsgemässen Getriebevorrichtung,
Fig. 2 einen Ausschnitt der Stellvorrichtung mit der erfindungsgemässen Getriebevorrichtung,
Fig. 3 eine Prinzipdarstellung mit der Getriebevorrichtung, und
Fig. 4 einen Ausschnitt der Stellvorrichtung mit der erfindungsgemässen Getriebevorrichtung und einer Variante eines Bewegungswandlers.

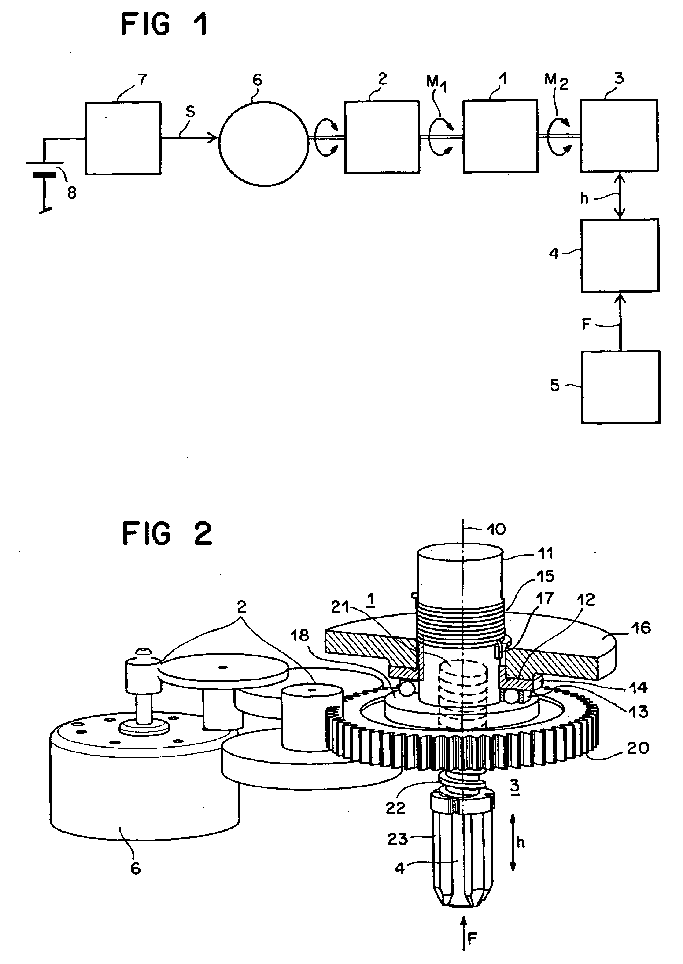

In der Fig. 1 umfasst eine beispielhafte Stellvorrichtung eine Getriebevorrichtung 1, eine Getriebestufe 2, einen Bewegungswandler 3, ein Betätigungselement 4, ein Stellglied 5, einen Elektromotor 6, eine elektronische Steuereinheit 7 und eine Speisung 8.

Die Getriebevorrichtung 1 ist mechanisch zwischen die Getriebestufe 2 und den Bewegungswandler 3 gekoppelt. Durch den Bewegungswandler 3 ist eine Rotationsbewegung der Getriebevorrichtung 1 in eine Längsbewegung h des Betätigungselements 4 und umgekehrt auch eine Längsbewegung h des Betätigungselements 4 in eine Rotationsbewegung der Getriebevorrichtung 1 umwandelbar.

Das Stellglied 5 ist beispielsweise ein Ventil oder eine Klappe und das Betätigungselement 4 ein Stössel oder ein Hebel zur Betätigung des Ventils bzw. der Klappe.

Die Getriebestufe 2 ist durch den Elektromotor 6 antreibbar. Der Elektromotor 6 wird über die mit der Speisung 8 verbundene Steuereinheit 7 über ein Steuersignal S gesteuert. In einer Ausführungsvariante ist die Stellvorrichtung ein Teil eines Regelkreises in der Heizungs-, Lüftungs-, Klima- oder Kältetechnik.

Ein vom Elektromotor 6 über die Getriebestufe 2 erzeugtes erstes Drehmoment M1 wird über die Getriebevorrichtung 1 vorzugsweise mit einem möglichst hohen Wirkungsgrad - im Idealfall praktisch verlustfrei - als ein zweites Drehmoment M2 an den Bewegungswandler 3 übertragen. Der Bewegungswandler 3 transformiert das zweite Drehmoment M2 - mit einem möglichst hohen Wirkungsgrad, vorzugsweise mindestens mit einem Wirkungsgrad > 50% - in die Längsbewegung h entgegen einer Kraft F des Stellglieds 5.

Erfindungsgemäss ist die Getriebevorrichtung 1 derart ausgelegt, dass - in einem Ruhezustand des Elektromotors 5 - die über das Betätigungselement 4 auf den Bewegungswandler 3 zurückwirkende Kraft F des Stellglieds 5 den Elektromotor 6 mit Sicherheit nicht zurückzudrehen vermag.

Die Getriebevorrichtung 1 ist also so geschaffen, dass in einer ersten Drehrichtung das vom Elektromotor 6 aufzubringende erste Drehmoment M1 möglichst verlustfrei in das an den Bewegungswandler 3 übertragene zweite Drehmoment M2 transformiert wird. Die Getriebevorrichtung 1 ist aber auch derart konstruiert, dass in der zur ersten Drehrichtung umgekehrten zweiten Drehrichtung, das vom Stellglied 5 über den Bewegungswandler 3 verursachte zweite Drehmoment M2 mit einem vorbestimmten Verlust behaftet an die Getriebestufe 2 abgegeben wird. Das in diesem Fall als Antriebmoment wirkende zweite Drehmoment M2 wird also durch die Getriebevorrichtung 1 mit einem derart niedrigem Wirkungsgrad in das als Abtriebsmoment wirkende erste Drehmoment M1 umgewandelt, dass der still stehende Elektromotor 6 nicht zurückgedreht wird.

In der Fig. 2 sind Funktionseinheiten der Stellvorrichtung, nämlich der Elektromotor 6, die nur skizzenhaft dargestellte Getriebestufe 2 und die mit der Getriebestufe 2 und dem Bewegungswandler 3 mechanisch gekoppelte Getriebevorrichtung 1 detailiert dargestellt.

Die vorteilhafte Ausführungsvariante der Getriebevorrichtung 1 umfasst eine um eine Drehachse 10 drehbare Welle 11, eine ein erstes Axiallager 12 und ein zweites Axiallager 13 aufweisende Axiallagervorrichtung, eine koaxial zur Welle 11 angeordnete Lagerbüchse 14, eine um die Welle 11 gewundene Schlingfeder 15 und ein ortsfestes Getriebeteil 16. Ein Ende 17 der Schlingfeder 15 ist an der Lagerbüchse 14 mit Vorteil durch Formschluss befestigt.

Die Schlingfeder 15 funktioniert als zwischen der Welle 11 und der Lagerbüchse 14 wirksame, von der Drehrichtung der Welle 11 abhängige Schlingfederkupplung.

Die Getriebevorrichtung 1 ist erfindungsgemäss derart aufgebaut, dass je nach Drehrichtung der Welle 11, die Welle 11 entweder über das erste Axiallager 12 oder dann über das zweite Axiallager 13 drehbar und axial am ortsfesten Getriebeteil 16 gelagert ist.

Mit Vorteil ist die Lagerbüchse 14 so ausgebildet und angeordnet, dass die Welle 11 radial durch die Lagerbüchse 14 am ortsfesten Getriebeteil 16 gelagert wird.

Das erste Axiallager 12 ist mit Vorteil zwischen dem ortsfesten Getriebeteil 16 und der Lagerbüchse 14 angeordnet und beispielhaft als zwischen dem ortsfesten Getriebeteil 16 und der Lagerbüchse 14 axial wirksames Gleitlager ausgebildet.

Das zweite Axiallager 13 ist mit Vorteil zwischen einer an der Welle 11 ausgebildeten Stufe 18 und der Lagerbüchse 14 angeordnet und mit Vorteil als Wälzlager, beispielsweise als Kugellager, ausgebildet.

Der ortsfeste Getriebeteil 16 ist beispielsweise ein Gehäuseteil der Stellvorrichtung oder eine Halterung oder ein Gehäuseteil der Getriebevorrichtung 1.

Zur Einbindung in eine Systemumgebung weist die Getriebevorrichtung 1 mechanische Ankopplungsstellen auf. Eine zur Ankopplung der Getriebevorrichtung 1 an die Getriebestufe 2 bestimmte erste mechanische Ankopplungsstelle 20 ist mit Vorteil ein direkt an der Welle 11 ausgebildetes, oder ein mit der Welle 11 starr verbundenes Zahnrad.

Eine zur Ankopplung der Getriebevorrichtung 1 an den Bewegungswandler 3 bestimmte zweite mechanische Ankopplungsstelle 21 ist beispielhaft ein direkt an der Welle 11 ausgebildetes Innengewinde.

Das Bewegungselement 4 weist ein zu dem als zweite mechanische Ankoppelungsstelle 21 dienenden Innengewinde passendes Aussengewinde 22 auf. Mit Vorteil ist wenigstens ein Steg 23 oder eine Nut direkt am Bewegungselement 4 ausgebildet, so dass das Bewegungselement 4 zur Ausführung der Längsbewegung h mit einem passenden, hier nicht dargestellten Gegenstück gegen Verdrehen gesichert werden kann.

Mit Vorteil sind wesentliche Funktionselemente des Bewegungswandlers 3 durch geeignete Ausgestaltungen der zweiten mechanische Ankopplungsstelle 21 und des Betätigungselements 4 verwirklicht.

Grundsätzlich sind die beiden mechanischen Ankoppelungsstellen 20 und 21 in weiten Grenzen an eine Systemumgebung anpassbar. Insbesondere ergeben sich zur Verwirklichung der zweiten mechanischen Ankoppelungsstelle 21 mehrere naheliegende Varianten, die sich mit der Wahl des vorgesehenen Bewegungswandlers 3 ergeben. In einer weiteren, nicht dargestellten Variante ist die zweite mechanische Ankopplungsstelle 21 durch an der Welle 11 angeordnete Nocken oder Schlitten verwirklicht, die in einen am Bewegungselement 4 angeordneten Wendel oder in eine am Bewegungselement 4 ausgenommene, spiralförmige Nut eingreifen.

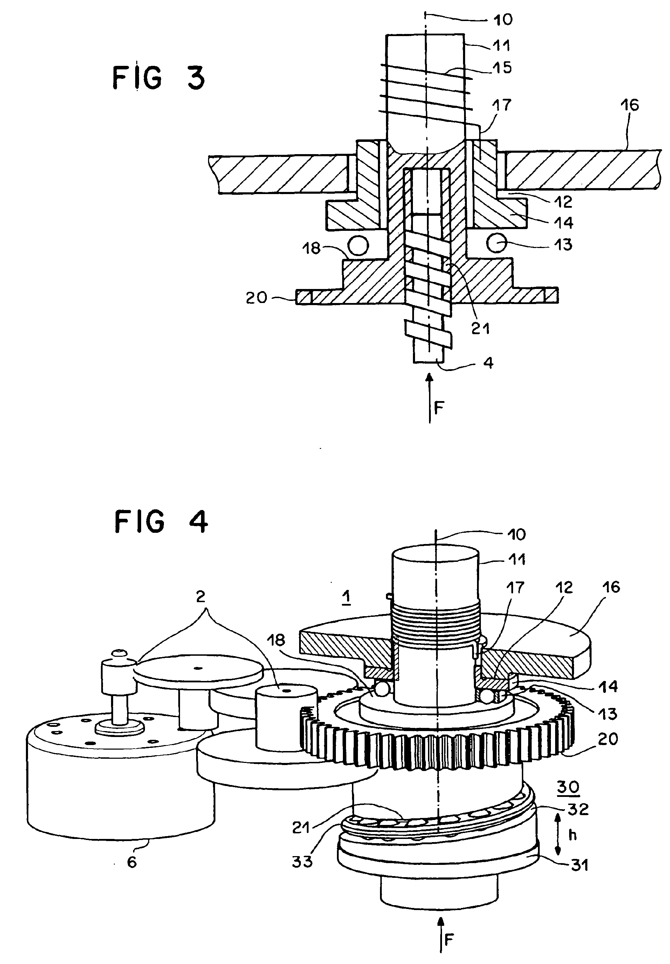

Zur Verdeutlichung ihrer Funktionsweise ist die einen drehrichtungsabhängigen Wirkungsgrad aufweisende Getriebevorrichtung 1 in der Fig. 3 prinzipiell skizziert. Die Schlingfeder 15 ist so gewickelt und auf der Welle 11 angeordnet, dass, bei einer Rotationsbewegung der Welle 11 - mit Blick in Pfeilrichtung der eingezeichneten Kraft F - gegen den Uhrzeigersinn, die Lagerbüchse 14 gelöst und damit von der Welle 11 entkoppelt ist. In diesem Fall ist die Welle 11 durch das zweite Axiallager 13 drehbar axial gelagert, welches einen hohen Wirkungsgrad aufweist.

Bei einer Rotationsbewegung der Welle 11 - mit Blick in Pfeilrichtung der eingezeichneten Kraft F - im Uhrzeigersinn, wird die Lagerbüchse 14 durch die Schlingfeder 15 an der Welle 11 fixiert, so dass die Lagerbüchse 14 mit der Welle 11 im Uhrzeigersinn rotiert, wodurch das erste Axiallager 12 wirksam geschaltet wird. In diesem Fall ist die Welle 11 durch das erste Axiallager 12 drehbar axial gelagert, welches - bezogen auf das zweite Axiallager 13 - einen niedrigeren Wirkungsgrad aufweist. Bei der Rotationsbewegung im Uhrzeigersinn ist also das den hohen Wirkungsgrad aufweisende zweite Axiallager 13 als Bewegungslager inaktiv geschaltet, da es zwischen der mit der Welle 11 drehenden Stufe 18 und der ebenfalls mit der Welle 11 drehenden Lagerbüchse 14 angeordnet ist.

In der Fig. 4 ist die zweite mechanische Ankoppelungsstelle 21 der Getriebevorrichtung 1 durch eine mit der Welle 11 um die Drehachse 10 drehbaren, wendelförmigen Stufe verwirklicht. Die wendelförmige Stufe weist einen Umgang auf und ist beispielhaft an der Welle 10 ausgebildet. Die wendelförmige Stufe ist Teil einer vorteilhaften Ausführungsvariante 30 des Bewegungswandlers 3 (Fig. 1). Eine Ausführungsvariante 31 des Betätigungselements 4 (Fig. 1) weist eine weitere wendelförmige Stufe 32 mit einem Umgang auf. Die Ausführungsvariante 31 des Betätigungselements 4 ist koaxial zur Drehachse 10 der Welle 11 angeordnet, jedoch gegen ein Verdrehen gesichert. Zwischen der wendelförmigen zweiten mechanischen Ankoppelungsstelle 21 und der weiteren wendelförmigen Stufe 32 ist ein Lagerelement 33 angeordnet. Die auf die Ausführungsvariante 31 des Betätigungselements wirkende Kraft F ist über das Lagerelement 33 auf die Welle 10 übertragbar. Das Lagerelement 33 ist mit Vorteil als Wälzlager - beispielsweise als Kugellager - ausgeführt. In einer kostengünstigen Variante ist das Lagerelement 33 ein lochscheibenförmiges Kunststoffband, in welchem Stahlkugel gefasst sind, und welches radial geschlitzt ist, so dass das Kunststoffband zwischen den beiden wendelförmigen Stufen 21 und 32 einbettbar ist. Mit der in der Fig. 4 dargestellten Ausführungsvariante 30 des Bewegungswandlers ist eine in eine Längsbewegung h wandelbare Drehbewegung der Welle 11 kleiner als eine volle Umdrehung, da eine minimale gegenseitige Abdeckung der beiden wendelförmigen Stufen 21 und 32 stets gewährleistet sein muss.

Es versteht sich von selbst, dass durch geeignete Auswahl und Abstimmung der Drehrichtung des Elektromotors 6, der Untersetzung der Getriebestufe 2, des Windungssinns der Schlingfeder 15, gegebenenfalls der Steigung und des Windungssinn eines Wendels am Bewegungswandler 3 und der Lagerreibung der beiden Axiallager 12 und 13 eine Vielzahl von Anforderungen an einen Antrieb - wie beispielsweise aufzubringende Stellkraft, Wirkrichtung und Hubbewegung - mit der erfindungsgemässen Getriebevorrichtung 1 erreichbar sind. Dass der Antrieb ausserdem optimal energiesparend einsetzbar ist, bringt den Vorteil, dass die Speisung 8 (Fig. 1) mittels einer Batterie oder ab einem Datenbus ermöglicht wird. Dadurch, dass die Getriebevorrichtung 1 den Betrieb von Antrieben, beispielsweise von Ventilantrieben bei minimalen Energieverbrauch erlaubt, ermöglicht lange Standzeiten ohne Batteriewechsel bei drahtlos gesteuerten Antrieben.

### Bezugszeichen

- 1: Getriebevorrichtung
- 2: Getriebestufe
- 3: Bewegungswandler
- 4: Betätigungselement
- 5: Stellglied
- 6: Elektromotor
- 7: Steuereinheit
- 8: Speisung

- 10: Drehachse
- 11: Welle
- 12: Axiallager, erstes
- 13: Axiallager, zweites
- 14: Lagerbüchse
- 15: Schlingfeder
- 16: ortsfestes Getriebeteil
- 17: Ende der Schlingfeder
- 18: Stufe

- 20: mechanische Ankopplungsstelle, erste
- 21: mechanische Ankopplungsstelle, zweite
- 22: Aussengewinde
- 23: Steg

- 30: Ausführungsvariante des Bewegungswandlers 3
- 31: Ausführungsvariante des Betätigungselements 4
- 32: wendelförmige Stufe
- 33: Lagerelement

- h: Längsbewegung
- M1: Drehmoment, erstes
- M2: Drehmoment, zweites
- S: Steuersignal
- F: Kraft

## Patentansprüche

1. Getriebevorrichtung mit einer Axiallagervorrichtung, mit einer in der Axiallagervorrichtung drehbar gelagerten Welle (11), mit einer ersten mechanischen Ankopplungsstelle (20) für eine Getriebestufe (2) und mit einer zweiten mechanischen Ankopplungsstelle (21) für einen Bewegungswandler (22, 23),
wobei vom Bewegungswandler (22, 23) eine Rotationsbewegung der Getriebevorrichtung (1) in eine Längsbewegung oder auch umgekehrt eine Längsbewegung in eine Rotationsbewegung der Getriebevorrichtung (1) umwandelbar ist,
eine axial auf die Welle (11) wirkende Kraft (F) über die Axiallagervorrichtung auf ein ortsfestes Teil (16) der Getriebevorrichtung (1) übertragbar ist,
die Axiallagervorrichtung konstruktionsbedingt derart ausgelegt ist, dass eine wirksame Lagerreibung von der Drehrichtung der Rotationsbewegung abhängig und für die beiden Drehrichtungen der Rotationsbewegung unterschiedlich ist,
die Axiallagervorrichtung ein erstes Axiallager (12) und auch ein zweites Axiallager (13) aufweist, bei einer Rotationsbewegung der Welle (11) in einer ersten Drehrichtung das erste Axiallager (12) wirksam ist, und bei einer Rotationsbewegung der Welle (11) in der - zur ersten Drehrichtung umgekehrten - zweiten Drehrichtung das zweite Axiallager (13) wirksam ist, und
an der Welle (11) eine Schlingfeder (15) angeordnet ist, durch welche die Axiallagereinrichtung (12, 13) bei einer Umkehr der Drehrichtung der Rotationsbewegung von einer ersten wirksamen Lagerreibung auf eine zweite wirksame Lagerreibung umschaltbar ist,
**dadurch gekennzeichnet, dass** die Schlingfeder (15) derart angeordnet ist, dass keines der beiden Axiallager (12, 13) durch die Schlingfeder (15) abgedeckt wird.

2. Getriebevorrichtung nach Anspruch 1, **dadurch gekennzeichnet, dass** bei einer Längsbewegung (h) eines mit dem Bewegungswandler (22, 23) gekoppelten Betätigungselements (4) entgegen einer Stellkraft (F) die Lagerreibung konstruktionsbedingt geringer ist als bei einer durch die Stellkraft (F) unterstützten Längsbewegung (h) des Betätigungselements (4).

3. Getriebevorrichtung nach einem vorangehenden Anspruch, **dadurch gekennzeichnet, dass** das ortsfeste Getriebeteil (16) ein Gehäuseteil ist.

4. Getriebevorrichtung nach Anspruch 1, **gekennzeichnet durch** eine koaxial zu einer Längsachse der Welle (11) und zwischen der Welle (11) und dem ortsfesten Getriebeteil (16) angeordnete und mit einem Ende (17) der Schlingfeder (15) verbundene Lagerbüchse (14), welche **durch** die Schlingfeder (15) bei Rotation der Welle (11) in der ersten Drehrichtung mit der Welle (11) mitgenommen oder bei Rotation in der zweiten Drehrichtung von der Welle (11) gelöst wird.

5. Getriebevorrichtung nach Anspruch 4, **dadurch gekennzeichnet, dass** das zweite Axiallager (13) zur Drehachse (10) axial zwischen einer Stufe (18) der Welle (11) und der Lagerbüchse (14) angeordnet ist.

6. Getriebevorrichtung nach Anspruch 5, **dadurch gekennzeichnet, dass** das erste Axiallager (12) zur Drehachse (10) axial zwischen dem ortsfesten Getriebeteil (16) und der Lagerbüchse (14) angeordnet ist.

7. Getriebevorrichtung nach einem vorangehenden Anspruch, **dadurch gekennzeichnet, dass** das erste Axiallager (12) ein Gleitlager und das zweite Axiallager (13) ein Wälzlager ist.

8. Getriebevorrichtung nach einem vorangehenden Anspruch, **dadurch gekennzeichnet, dass** die erste mechanische Ankopplungsstelle (20) ein auf die Getriebestufe (2) abgestimmter Zahnkranz und die zweite mechanische Ankopplungsstelle (21) ein auf den Bewegungswandler (22) abgestimmtes und an der Welle (11) ausgebildetes Gewinde ist.

## Claims

1. Gear mechanism apparatus having an axial bearing apparatus, having a shaft (11) which is mounted rotatably in the axial bearing apparatus, having a first mechanical coupling point (20) for a gear stage (2) and having a second mechanical coupling point (21) for a movement converter (22, 23),
it being possible for a rotational movement of the gear mechanism apparatus (1) to be converted by the movement converter (22, 23) into a longitudinal movement or else, conversely, a longitudinal movement to be converted into a rotational movement of the gear mechanism apparatus (1),
it being possible for a force (F) which acts axially on the shaft (11) to be transmitted via the axial bearing apparatus to a stationary part (16) of the gear mechanism apparatus (1),
the axial bearing apparatus is configured because of its construction in such a way that active bearing friction is dependent on the rotational direction of the rotational movement and is different for the two rotational directions of the rotational movement,
the axial bearing apparatus has a first axial bearing (12) and also a second axial bearing (13), the first axial bearing (12) is active during a rotational movement of the shaft (11) in a first rotational direction, and the second axial bearing (13) is active during a rotational movement of the shaft (11) in the second rotational direction which is the opposite direction to the first rotational direction, and
a wrap spring (15) is arranged on the shaft (11) and by way of which the axial bearing device (12, 13) can be switched from a first active bearing friction to a second active bearing friction if the rotational direction of the rotational movement is reversed,
**characterized**
**in that** the wrap spring (15) is arranged such that neither of the two axial bearings (12, 13) are covered by the wrap spring (15).

2. Gear mechanism apparatus according to Claim 1, **characterized in that**, during a longitudinal movement (h) counter to an actuating force (F) of an actuating element (4) which is coupled to the movement converter (22, 23), the bearing friction is lower because of the construction than during a longitudinal movement (h) of the actuating element (4) which is supported by the actuating force (F).

3. Gear mechanism apparatus according to a preceding claim, **characterized in that** the stationary gear mechanism part (16) is a housing part.

4. Gear mechanism apparatus according to Claim 1, **characterized by** a bearing bush (14) which is arranged coaxially with respect to a longitudinal axis of the shaft (11) and between the shaft (11) and the stationary gear mechanism part (16), is connected to one end (17) of the wrap spring (15), and is driven with the shaft (11) by the wrap spring (15) during rotation of the shaft (11) in the first rotational direction or is released from the shaft (11) during rotation in the second rotational direction.

5. Gear mechanism apparatus according to Claim 4, **characterized**
**in that** the second axial bearing (13) is arranged axially with respect to the rotational axis (10) between a step (18) of the shaft (11) and the bearing bush (14).

6. Gear mechanism apparatus according to Claim 5,
**characterized**
**in that** the first axial bearing (12) is arranged axially with respect to the rotational axis (10) between the stationary gear mechanism part (16) and the bearing bush (14).

7. Gear mechanism apparatus according to a preceding claim, **characterized in that** the first axial bearing (12) is a sliding bearing and the second axial bearing (13) is a roller bearing.

8. Gear mechanism apparatus according to a preceding claim, **characterized in that** the first mechanical coupling point (20) is a crown gear which is adapted to the gear stage (2) and the second mechanical coupling point (21) is a thread (21) which is adapted to the movement converter (22) and is formed on the shaft (11).

## Revendications

1. Dispositif de transmission comprenant un dispositif de paliers à roulement axial, un arbre (11) logé de manière tournante dans le dispositif de paliers à roulement axial, un premier point de couplage (20) mécanique pour un étage de transmission (2) et un second point de couplage (21) mécanique pour un convertisseur de mouvement (22, 23),
un mouvement de rotation du dispositif de transmission (1) étant convertissable en un mouvement longitudinal par le convertisseur de mouvement (22, 23), ou également inversement un mouvement longitudinal étant convertissable en un mouvement de rotation du dispositif à transmission (1) par le convertisseur de mouvement,
une force (F) agissant axialement sur l'arbre (11) étant transmissible sur une partie stationnaire (16) du dispositif de transmission (1) par l'intermédiaire du dispositif de paliers à roulement axial,
le dispositif de paliers à roulement axial étant conçu de telle manière en raison de sa construction qu'une friction efficace dans le palier dépend du sens de rotation du mouvement de rotation et est différente pour les deux sens de rotation du mouvement de rotation,
le dispositif de paliers à roulement axial présentant un premier palier à roulement axial (12) et également un second palier à roulement axial (13), le premier palier à roulement axial (12) étant efficace lors d'un mouvement de rotation de l'arbre (11) dans un premier sens de rotation, et le second palier à roulement axial (13) étant efficace lors d'un mouvement de rotation de l'arbre (11) dans le second sens de rotation - inverse au premier sens de rotation - et
un ressort enroulé (15) étant disposé sur l'arbre (11), au moyen duquel ressort enroulé le dispositif de paliers à roulement axial (12, 13) est commutable, lors d'une inversion du sens de rotation du mouvement de rotation, d'une première friction de roulement efficace sur une seconde friction de roulement efficace,
**caractérisé en ce que** le ressort enroulé (15) est disposé de telle manière qu'aucun des deux paliers à roulement axial (12, 13) n'est recouvert par le ressort enroulé (15).

2. Dispositif de transmission selon la revendication 1, **caractérisé en ce que** lors d'un mouvement longitudinal (h) d'un élément d'actionnement (4) couplé au convertisseur de mouvement (22, 23) contre une force de réglage (F), la friction de roulement est plus petite, en raison de la construction, que lors d'un mouvement longitudinal (h) de l'élément de réglage (4), supporté par la force de réglage (F).

3. Dispositif de transmission selon l'une quelconque des revendications précédentes, **caractérisé en ce que** la partie de transmission stationnaire (16) est une partie de carter.

4. Dispositif de transmission selon la revendication 1, **caractérisé par** un coussinet (14) disposé de manière coaxiale par rapport à un axe longitudinal de l'arbre (11) et entre l'arbre (11) et la partie de transmission stationnaire (16) et raccordé à une extrémité (17) du ressort enroulé (15), lequel coussinet est entraîné avec l'arbre (11) au moyen du ressort enroulé (15) lors de la rotation de l'arbre (11) dans le premier sens de rotation ou est détaché de l'arbre (11) lors de la rotation dans le second sens de rotation.

5. Dispositif de transmission selon la revendication 4, **caractérisé en ce que** le second palier à roulement axial (13) est disposé entre un étage (18) de l'arbre (11) et le coussinet (14), de manière axiale par rapport à l'axe de rotation (10).

6. Dispositif de transmission selon la revendication 5, **caractérisé en ce que** le premier palier à roulement axial (12) est disposé entre la partie de transmission stationnaire (16) et le coussinet (14), de manière axiale par rapport à l'axe de rotation (10).

7. Dispositif de transmission selon l'une quelconque des revendications précédentes, **caractérisé en ce que** le premier palier à roulement axial (12) est un palier lisse et le second palier à roulement axial (13) un palier à roulement.

8. Dispositif de transmission selon l'une quelconque des revendications précédentes, **caractérisé en ce que** le premier point de couplage mécanique (20) est une couronne dentée adaptée à l'étage de transmission (2) et le second point de couplage mécanique (21) est un filetage adapté au convertisseur de mouvement (22) et formé sur l'arbre (11).
